# EUROPEAN PATENT SPECIFICATION

(11) **EP 2 173 806 B1**
(45) Date of publication and mention of the grant of the patent: **10.10.2012**
(21) Application number: 08786109.2
(22) Date of filing: 14.07.2008
(51) Int. Cl.: C08L 23/14, C08K 5/5313, C08L 23/20

(54) **USE OF NUCLEATED PROPYLENE BUTENE TERPOLYMERS FOR THE PRODUCTION OF STERILIZABLE BLOWN FILMS**
VERWENDUNG VON NUKLEIERTEN PROPYLEN-BUTEN-TERPOLYMEREN ZUR HERSTELLUNG VON STERILISIERBAREN BLASFOLIEN
UTILISATION DE TERPOLYMÈRES PROPYLÈNE BUTÈNE NUCLÉÉS POUR LA PRODUCTION DE FILMS SOUFFLÉS STÉRILISABLES

(30) Priority: 31.07.2007 EP 07113499
(43) Date of publication of application: 14.04.2010
(73) Proprietor: Borealis Technology OY, 06101 Porvoo (FI)
(72) Inventor: GREIN, Christelle, A-4020 Linz (AT); GRÜNBERGER, Manfred, A-4040 Linz (AT); WOLFSBERGER, Anton, A-4210 Gallneukirchen (AT); NIEDERSÜSS, Peter, A-4312 Ried/Riedmark (AT)
(74) Representative: Maiwald Patentanwalts GmbH
(86) International application number: PCT/EP2008/059152
(87) International publication number: WO 2009/016022

(56) References cited:
- WO-A-02/44252
- WO-A-96/21563
- WO-A-2005/026240

## Description

The present invention relates to the use of nucleated propylene/butene/ethylene terpolymers for the production of sterilizable blown films.

Blown films produced from these polymers are sterilizable and have excellent optical properties as well as mechanical properties.

### Technological background

Polyolefins have gained wide acceptance and usage in numerous commercial applications because of their relatively low costs and desirable properties.

Such commercial applications include plastic films such as cast films, blown films, mono- and biaxially oriented films and coating. These plastic films can for example be used for various flexible and rigid packaging, e.g. for food, medicals, flowers.

In a continuously increasing part of this market, especially in the pharmaceutical area, but also in food packaging the material is sterilized in one or the other way. Disadvantageously the use of heat (steam), radiation or chemicals for sterilization usually affects the mechanical and optical properties of the material significantly.

Polypropylene for films is today almost exclusively used for cast films. In the cast film process a very quick cooling of the melt is achieved with a chill roll, in order to utilize the potentially good optical and mechanical properties of polypropylene for film applications.

Until recently, polypropylene could be used in the blown film process only when it was possible to use water contact cooling in order to achieve the same quick cooling as in the cast film process.

In a conventional blown film process using air cooling, the polymer melt and the films produced from it are only slowly cooled. This results in insufficient optical and mechanical parameters because the slow cooling process causes an uncontrolled growth of the crystal- and spherulitic structure. Propylene blown films produced with air cooling are both cloudy and brittle.

It has therefore been tried to improve the problem of cloudiness respectively haziness and brittleness of polypropylene blown films by using a combination of propylene random copolymers with either inorganic nucleating agent or sorbitol-based nucleating agents, which resulted in improvements of optical and mechanical parameters to a very limited extent. So there was the need to look for further improvements for air quenched blown films from propylene polymers.

In the examples of WO 2005/026240 blown films, comprising a polypropylene composition containing a propylene homopolymer or propylene copolymer with 4.8 wt% ethylene, the polypropylene copolymer composition containing 0.2 wt% of a clarifier comprising a phosphate-based α-nucleating agent respectively a sorbitol-based α-nucleating agent, are described.

In these examples it is shown that the blown film of the propylene ethylene copolymer comprising the phosphate-based α-nucleating agent has better optical properties gloss and haze compared to a blown film of a propylene ethylene copolymer comprising the sorbitol-based α-nucleating agent. The blown film according to example 1 further shows a tensile modulus of about 925 MPa (md) respectively of about 972 MPa (td).

WO-A-96/4563 discloses nucleated cast films of propylene copolymers.

WO 02/44252 discloses the use of polymer compositions comprised of a propylene terpolymer and erucic acid amide and/or oleic acid amide as slip agent for films, like cast films or blown films, which exhibit the following properties:
a) a dynamic Coefficient of Friction after storage for 3 days at 23 °C of smaller than 0.30 (measured according to DIN 53 375)
b) a blooming behavior, measured in terms of haze according to ASTM D 1003-92 after storage for 14 days at 40 °C which shows a deterioration of no more than 100 % of the original value which is measured after storage for 4 days at 23 °C.

Further it is described that lamination films produced from these polymer compositions show a smaller loss of optical properties compared to films from propylene butene or propylene ethylene random copolymers after sterilization at 121 °C for 30 minutes.

The tensile modulus of the films produced with cast film technology is between 385 and 440 MPa.

WO 03/040202 discloses e.g. blown films made from - amongst other polymers -propylene/1-butene copolymers and propylene/ethylene/1-butene terpolymers.

These films comprise at least 50 wt% propylene and at least 5 wt% ethylene and/or one or more unsaturated comonomer and have a haze value of less than about 10 and a 45° gloss of greater than about 65.

In the examples, WO 03/040202 describes a base resin for blending studies for the production of blown films using a commercially available Ziegler-Natta propylene (H110-02Z: a Z-N mini-random PP containing 0.5 wt% ethylene, nucleated with methylene-bis-(4,6-di-t-butylphenyl) phosphate sodium salt, available from The Dow Chemical Company). The resulting blown film disclosed as a comparative example showed less favorable properties than the blends comprising special P/E copolymers claimed in WO 03/040202.

It is therefore an object of the present invention to provide improved water or air quenched blown films, preferably air quenched blown films, produced from propylene butene terpolymers, which are sterilizable and have improved mechanical properties and excellent optical properties, which are even improved after sterilization.

This object was achieved by using a polymer composition comprised of
(i) a propylene/butene terpolymer which is comprised of
   86.0 - 98.0 wt% of propylene
   2.0 - 12.0 wt% of 1-butene and
   0.1 - less than 1.0 wt% of ethylene and
(ii) 0.001 - 1.0 wt% of one or more phosphorous based and/or polymeric α-nucleating agents
for the production of sterilizable water or air quenched blown films which have the following properties:
a) a haze according to ASTM D 1003-92 for a 50 µm film of less than 8% before and after steam sterilization at 121 °C for 30 minutes and
b) 20° Gloss according to DIN 67 530 for a 50 µm film of at least 55% before steam sterilization at 121 °C for 30 minutes and of at least 60% after steam sterilization at 121 °C for 30 minutes.

Surprisingly these films combine high stiffness (tensile modulus) and excellent optical parameters, which are even improved after sterilization.

The use of these propylene terpolymer compositions for the production of sterilizable blown films, preferably air quenched blown films, having the above cited desirable advantages is not disclosed in the state of the art.

According to further embodiments of the present invention ethylene is preferably present at levels less than 1.0 wt%, more preferably less than 0.5 wt% and most preferably between 0.1 and 0.4 wt%.

According to further embodiments of the present invention butene is preferably present at levels of more than 5 wt%, more preferably more than 6 wt% and most preferably between 7 and 12 wt%.

Additionally the composition can contain other polymers like HDPE, LDPE, LLDPE, VLDPE, ULDPE or other polymers or copolymers containing ethylene and another α-olefin.

The polymer composition further contains 0.001 to 1.0 % wt of one or more alpha-nucleating agents. Preferably 0.005 to 0.5 wt%, more preferably 0.01 to 0.3 wt% of one or more alpha-nucleating agents are added. Smaller amounts of alpha-nucleating agents than 0.001 wt% usually do not give the desired level of effect, while with larger amounts than 1 wt%, although giving the desired effect, the produced blown films are becoming too expensive because of the high priced nucleating agents.

The alpha-nucleating agent which may be used for the polymer composition of the invention include organic alpha-nucleating agents selected from the group of phosphorous based nucleating agents like phosphoric acid esters metal salts represented by formula I 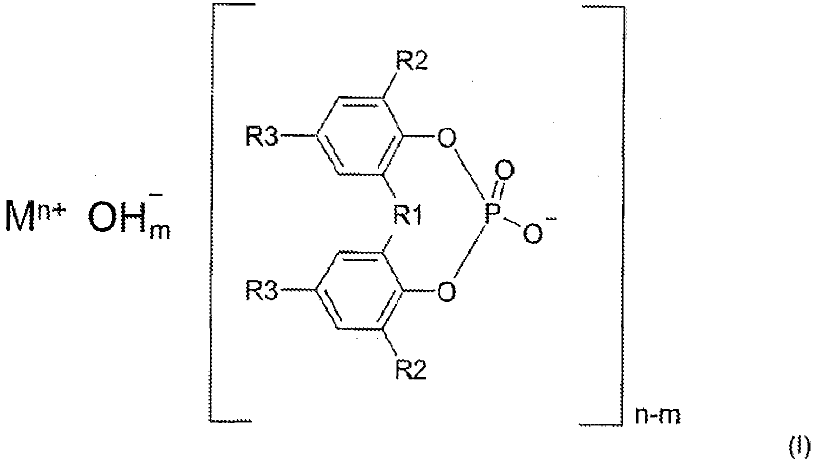 wherein R1 is oxygen, sulphur or a hydrocarbon group of 1 to 10 carbon atoms; each of R2 and R3 is hydrogen or a hydrocarbon or a hydrocarbon group of 1 to 10 carbon atoms; R2 and R3 may be the same or different from each other, two of R2, two of R3, or R2 and R3 may be bonded together to form a ring, M is a monovalent to trivalent metal atom; n is an integer from 1 to 3 and m is either 0 or 1, provided that n > m.

Preferred examples of the alpha nucleating agents represented by the above formula include sodium-2,2'-methylene-bis(4,6-di-t-butylphenyl)phosphate, sodium-2,2'-ethylidene-bis(4,6-di-t-butylphenyl)-phosphate, lithium-2,2'-methylene-bis(4,6-di-t-butylphenyl)phosphate, lithium-2,2'-ethylidene-bis(4,6-di-t-butylphenyl)phosphate, sodium-2,2'-ethylidene-bis(4-i-propyl-6-t-butylphenyl)phosphate, lithium-2,2'-methylene-bis(4-methyl-6-t-butylphenyl)phosphate, lithium-2,2'-methylene-bis(4-ethyl-6-t-butylphenyl)phosphate, calcium-bis[2,2'-thiobis(4-methyl-6-t-butylphenyl)-phosphate], calcium-bis[2,2'-thiobis(4-ethyl-6-t-butylphenyl)-phosphate], calcium-bis[2,2'-thiobis(4,6-di-t-butylphenyl)phosphate], magnesium-bis[2,2'-thiobis(4,6-di-t-butylphenyl)phosphate], magnesium-bis[2,2'-thiobis(4-t-octylphenyl)phosphate], sodium-2,2'-butylidene-bis(4,6-dimethylphenyl)phosphate, sodium-2,2'-butylidene-bis(4,6-di-t-butylphenyl)-phosphate, sodium-2,2'-t-octylmethylene-bis(4,6-dimethyl-phenyl)-phosphate, sodium-2,2'-t-octylmethylene-bis(4,6-di-t-butylphenyl)-phosphate, calcium-bis[2,2'-methylene-bis(4,6-di-t-butylphenyl)-phosphate], magnesium-bis[2,2'-methylene-bis{4,6-di-t-butylphenyl)-phosphate], barium-bis[2,2'-methylene-bis(4,6-di-t-butylphenyl)-phosphate], sodium-2,2'-methylene-bis(4-methyl-6-t-butylphenyl)-phosphate, sodium-2,2'-methylene-bis(4-ethyl-6-t-butylphenyl)phosphate, sodium(4,4'-dimethyl-5,6'-di-t-butyl-2,2'-biphenyl)phosphate, calcium-bis-[(4,4'-dimethyl-6,6'-di-t-butyl-2,2'-biphenyl)phosphate], sodium-2,2'-ethyli-dene-bis(4-m-butyl-6-t-butylphenyl)phosphate, sodium-2,2'-methylene-bis-(4,6-di-methylphenyl)-phosphate, sodium-2,2'-methylene-bis(4,6-di-t-ethyl-phenyl)phosphate, potassium-2,2'-ethylidene-bis(4,6-di-t-butylphenyl)-phosphate, calcium-bis[2,2'-ethylidene-bis(4,6-di-t-butylphenyl)-phosphate], magnesium-bis[2,2'-ethylidene-bis(4,6-di-t-butylphenyl)-phosphate], barium-bis[2,2'-ethylidene-bis-(4,6-di-t-butylphenyl)-phosphate], aluminium-hydroxy-bis[2,2'-methylene-bis(4,6-di-t-butyl-phenyl)phosphate], aluminium-tris[2,2'-ethylidene-bis(4,6-di-t-butylphenyl)-phosphate].

A second group of phosphorous based nucleating agents includes for example aluminium-hydroxyl-bis[2,4,8,10-tetrakis(1,1-dimethylethyl)-6-hydroxy-12H-dibenzo-[d,g]-dioxa-phoshocin-6-oxidato] and blends with Li-myristate or Li-stearate.

Of the phosphorous based nucleating agents sodium-2,2'-methylene-bis(4,6-di-t-butylphenyl)phosphate or aluminium-hydroxy-bis[2,2'-methylene-bis(4,6-di-t-butyl-phenyl)-phosphate] or aluminium-hydroxyl-bis-[2,4,8,10-tetrakis(1,1-dimethylethyl)-6-hydroxy-12H-dibenzo-[d,g]-d ioxa-phoshocin-6-oxidato] or blends with Li-myristate or Li-stearate are especially preferred.

Further suitable alpha-nucleating agents are polymeric nucleating agents selected from the group consisting of vinylcycloalkane polymers and vinylalkane polymers. Nucleation with these polymeric nucleating agents is either accomplished by a special reactor technique, where the catalyst is prepolymerised with monomers like e.g. vinylcyclohexane (VCH), or by blending the propylene polymer with the vinyl(cyclo)alkane polymer. These methods are described in greater detail in e.g. EP 0 316 187 A2 and WO 99/24479.

Nucleating agents such as ADK NA-11 (Methylen-bis(4,6-di-t-butylphenyl)phosphate sodium salt) and ADK NA-21 (aluminium hydroxyl-bis[2,4,8,10-tetrakis(1,1-d imethylethyl)-6-hydroxy-12H-dibenzo-[d,g]-dioxaphoshocin-6-oxidato]) are commercially available from Asahi Denka Kokai and are preferably added to the propylene-based composition of the invention.

Among all alpha nucleating agents mentioned above aluminium hydroxyl-bis[2,4,8,10-tetrakis(1,1-dimethylethyl)-6-hydroxy-12H-dibenzo-[d,g]-dioxaphoshocin-6-oxidato] based nucleating agents like ADK NA-21, NA-21 E, NA-21 F, sodium-2,2'-methylene-bis(4,6-di-t-butylphenyl)phosphate (ADK NA-11), aluminium-hydroxy-bis[2,2'-methylene-bis(4,6-di-t-butylphenyl)-phosphate] and polymeric nucleating agents selected from the group consisting of vinylcycloalkane polymers and vinylalkane polymers are particularly preferred.

Most particularly preferred nucleating agents are ADK NA-21 and ADK NA-11.

The propylene compositions which are used for the films according to the invention may contain various additives, which are generally used in propylene compositions, such as stabilizers, antioxidants, acid neutralizing agents, lubricants, ultraviolet absorbers, antiblocking agents, antistatic agents, antifogging agents, provided they do not adversely affect the desired properties of the composition.

Preferred antioxidants are sterically hindered phenolic antioxidants, e.g.2-t-butyl-4,6-dimethylphenol, 2,6-di-t-butyl-4-methyl-phenol, 2,6-di-t-butyl-4-isoamylphenol, 2,6-di-t-butyl-4-ethylphenol, 2-t-butyl-4,6-diisopropylphenyl, 2,6-dicyclopentyl-4-methylphenol, 2,6-di-t-butyl-4-methoxymethylphenol, 2-t-butyl-4,6-dioctadecylphenol, 2,5-di-t-butylhydroquinone, 2,6-di-t-butyl-4,4-hexadecyloxyphenol, 2,2'-methylene-bis(6-t-butyl-4-methylphenol), 4,4'-thio-bis-(6-t-butyl-2-methylphenol), 2,2'-thiodiethylenebis-(3,5-di-tert.-butyl-4-hydroxyphenyl)-propionate, octadecyl-3-(3,5-di-t-butyl-4-hydroxyphenyl)propionate, 1,3,5-trimethyl-2,4,6-tris(3',5'-di-t-butyl-4-hydroxybenzyl)benzene, 2,5,7,8-Tetramethyl-2(4',8',12'-trimethyltridecyl)-chroman-6-ol and pentaerythrityl-tetrakis-3-(3,5-di-t-butyl-4-hydroxyphenyl)propionate.

Antioxidants which are commercially available are for example from Ciba Speciality Chemicals Irganox 1010, Irganox 1330, Irganox 1076, Irganox 1035, Irganox E201.

Preferred stabilizers are phosphite based stabilizers, e.g. tris-(2,4-di-t-butylphenyl)-phosphite), Bis(2,4-di-t-butylphenyl)-pentaerythrityl-di-phosphite, Bis(2,4-dicumyl-phenyl)pentaerythritol diphosphite. Commercially available stabilizers are for example from Ciba Speciality Chemicals Irgafos 168, Irgafos 126 or from Dover Chemical Corporation Doverphos S-9228 CT.

The acid neutralizing agents and/or lubricants are for example carboxylic acid salts, where the metal is selected from the 1^{st} or 2^{nd} group of the periodic table or from transition metals like zinc. Preferred carboxylates are Li-stearate; K-stearate, Li-myristate, Na-myristate, K-myristate, Ca-stearate, Mg-stearate, Ca-12-hydroxy stearate, Mg-12-hydroxy stearate, Ca-myristate, Ca-palmitate, Ca-laurate, Mg-myristate, Mg-palmitate, Mg-laurate and Zn-stearate.

Also zeolite structures (hydrotalcite, both natural and synthetic), magnesium oxide or zinc oxide can be used.

Preferably a synthetic hydrotalcite (SHT), more preferably Mg₄,₅Al₂(OH) ₁₃(CO₃) 3,5H₂O is added.

Further it is particularly preferred to use the above polymer compositions for the production of sterilizable blown films, preferably air quenched blown films with a haze according to ASTM D 1003-92 for a 50 µm film of less than 8%, preferably of less than 7, more preferably of less than 6 and most preferably of less than 5 before and after steam sterilization at 121 °C for 30 minutes.

In addition to the above described characteristics, it is preferred to use the above polymer compositions for the production of sterilizable blown films, preferably air quenched blown films with a 20° gloss according to DIN 67 530 for a 50 µm film of at least 55%, preferably of at least 58% before sterilization and of at least 60%, preferably of at least 65%, more preferably of at least 70 %, after steam sterilization at 121°C for 30 minutes.

The blown films produced from polymer compositions which are used according to the present invention have a S.I.T (Seal Initiation Temperature) of ≤130 °C, preferably of ≤125 °C for a 50 µm blown film.

According to a further embodiment the blown films have the following property:
a tensile modulus (md) according ISO 527 of at least 1000 MPa for a 50 µm blown film.

It is particularly preferred to use the above polymer composition for the production of blown films with a tensile modulus (md) of above 1150 MPa and more preferably above 1200 MPa.

According to the invention it is advantageous to use a polymer composition comprised of a propylene/butene terpolymer which has a proportion of polymer soluble in cold xylene at 23°C of no more than 5%, preferably of no more than 4.5% and more preferably of no more than 4.0%.

The films produced from polymer compositions containing these terpolymers meet the solubles requirements which are necessary for applications in food packaging.

The films according to the present invention have a preferred thickness of from 5 to 1500 µm, more preferably to 1000 µm and most preferably to 200 µm.

The films which are obtainable according to the present invention are advantageously used for the production of sterilizable films.

A further aspect of the invention relates to the use of the polymer composition of the invention for multilayer blown films, where at least one layer is comprised of a propylene blown film according to the invention.

### Description of Production of Propylene/Butene Terpolymer

The particular type of polymerization process utilized is not critical to the operation of the present invention and the polymerization processes now regarded as conventional are suitable in the process of the invention.

The polymerization process for the production of the polymers according to the invention may be a continuous process or a batch process utilizing known methods.

The polymer composition of the invention may be produced by single- or multistage process polymerization of propylene, 1-butene and ethylene such as bulk polymerization, gas phase polymerization, slurry polymerization, solution polymerization or combinations thereof. Those processes are well known to one skilled in the art.

A preferred process is a combination of bulk slurry loop reactor(s) and gas phase reactor(s). The polymer composition of the invention can be made either in loop reactors or in a combination of loop and gas phase reactors. One skilled in the art is aware of the various possibilities to produce propylene co- and terpolymers and will simply find out a suitable procedure to produce suitable polymers which are used in the present invention.

The process is preferably carried out in the presence of a stereospecific catalyst system.

All catalysts suitable for the polymerization of propylene with butene and ethylene such as Ziegler Natta catalysts and single-site catalysts, including metallocenes and non-metallocenes, can be used.

Any metallocene catalyst capable of catalyzing the formation of a propylene/butene co- or terpolymer can also be used as single-site catalyst. A suitable metallocene catalyst comprises a metallocene/activator reaction product impregnated in a porous support at maximum internal pore volume. The catalyst complex comprises a ligand which is typically bridged, and a transition metal of group IVa...VIa, and an organoaluminium compound. The catalytic metal compound is typically a metal halide.

In a preferred embodiment of the process, the process as discussed above is carried out using a Ziegler-Natta catalyst, in particular a high yield Ziegler-Natta catalyst (so called fourth and fifth generation type to differentiate from low yield, so called second generation Ziegler-Natta catalysts). A suitable Ziegler-Natta catalyst to be employed in accordance with the present invention comprises a catalyst component (optionally a vinyl-modified catalyst component), a co-catalyst component and at least one electron donor (internal and/or external electron donor, preferably at least one external donor). Preferably, the catalyst component is a Ti-Mg-based catalyst component and typically the co-catalyst is an Al-alkyl based compound. Such catalyst systems are described, for example, US 5,234,879, WO 92/19653, WO 92/19653, WO 99/33843, WO 02/60962 , and such systems comprising vinyl-modified catalyst components in WO 99/24478 and WO 99/24479.

An essential component in those catalysts are solid catalyst components comprising a titanium compound having at least one titanium-halogen bond, an internal electron donor compound and a magnesium halide in active form as a carrier for both the titanium component and the donor compound. The catalysts can contain - as internal electron donor - compounds selected from ethers, ketones, lactones, compounds containing N, P and/or S atoms and esters of mono and dicarboxylic acids.

A further essential component of the catalyst is an organoaluminium compound, such as an alkylaluminium compound.

Additionally, an external electron donor is generally used. Preferred external donors are the known silane-based donors, preferably dicyclopentyl dimethoxy silane or cyclohexyl methyldimethoxy silane.

To obtain the propylene/butene terpolymer, it is preferred to use a polymerization process based on a combination of one or more bulk polymerization reactor(s) and one or more gas phase reactor(s).

Preferably the process comprises also a prepolymerization with the chosen catalyst system. Preferably the propylene polymer composition of the invention is produced in loop reactors or in a combination of loop and gas phase reactor. Those processes are well known to one skilled in the art.

A slurry reactor designates any reactor, such as a continuous or simple batch stirred tank reactor or loop reactor, operating in bulk or slurry and in which the polymer forms in particulate form. "Bulk" means a polymerization in reaction medium that comprises at least 60 wt-% monomer. According to a preferred embodiment the slurry reactor comprises a bulk loop reactor.

It is also possible to use several reactors of each type, e.g. one loop reactor and two or three gas phase reactors or two loops and one gas phase reactor, in series.

"Gas phase reactor" means any mechanically mixed or fluid bed reactor. Preferably the gas phase reactor comprises a mechanically agitated fluid bed reactor with gas velocities of at least 0.2 m/sec.

The particularly preferred embodiment of the invention comprises carrying out the polymerization in a process comprising loop and gas phase reactors.

A preferred multistage process is the above-identified slurry-gas phase process, such as developed by Borealis and known as the Borstal^{®} technology. In this respect, reference is made to the European applications EP 0 887 379 A1 and EP 517 868 A1.

With respect to the above-mentioned preferred slurry-gas phase process, the following general information can be provided with respect to the process conditions.

Temperature of from 40°C to 110°C, preferably between 60°C and 100°C, in particular between 70°C and 90°C, with a pressure in the range of from 20 to 80 bar, preferably 30 to 60 bar, with the option of adding hydrogen in order to control the molecular weight in a manner known per se.

The reaction product of the slurry polymerization, which preferably is carried out in a loop reactor, is then transferred to the subsequent gas phase reactor, wherein the temperature preferably is within the range of from 50°C to 130°C, more preferably 60°C to 100°C, at a pressure in the range of from 5 to 50 bar, preferably 15 to 35 bar, again with the option of adding hydrogen in order to control the molecular weight, with the option of adding hydrogen in order to control the molecular weight in a manner known per se.

The residence time can vary in the reactor zones identified above. In one embodiment, the residence time in the slurry reactor, for example a loop reactor, is in the range of from 0.5 to 5 hours, for example 0.5 to 2 hours, while the residence time in the gas phase reactor generally will be from 1 to 8 hours.

If desired, the polymerization may be effected in a known manner under supercritical conditions in the slurry, preferably loop reactor, and/or as a condensed mode in the gas phase reactor.

The polymerization process enable highly feasible means for producing and further tailoring the propylene polymer composition within the invention. E.g. the properties of the polymer composition can be adjusted or controlled in a known manner e.g. with one or more of the following process parameters: temperature, hydrogen feed, comonomer feed, propylene feed e.g. in the gas phase reactor, catalyst, the type and amount of an external donor (if used), split between components. The precise control of the polymerization conditions and reaction parameters is within the skill of the art.

After polymerization in the first and the optional second reactor is finished, through known after-treatment steps including the steps of deactivating the catalyst, removing the catalyst residue and drying, the aimed co- or terpolymer can be produced.

The resulting polymer particles may be pelletized in a conventional compounding extruder with various additives, which are generally used in the thermoplastic polymer compositions, such as stabilizers, antioxidants, acid neutralizing agents, antistatic agents, provided they do not adversely affect the desired properties of the composition.

Further the polymer material contains at least one α-nucleating agent which is derived from phosphate-based and/or polymeric nucleating agents, which may be added directly in the compounding step or during the processing of films in the way of an external master batch.

### Applications

The propylene/butene terpolymer can be used for all extrusion technologies.

Preferably they are used for technologies for extruded bi- and monoaxially - and non oriented blown films in a film thickness range between 5 to 1500 µm.

More preferably they are used for the manufacturing of stiff non-oriented and bi- and monoaxially oriented films between 5 and 1000 µm with the blown film technology.

Most preferably they are used for the manufacturing of non-oriented blown films in the thickness range between 5 to 200 µm.

### Description of film production by blown film technology

The polymer compositions of the invention are capable of being manufactured into water or air quench blown films; preferably air quenched blown films, on typical polyethylene blown film production equipment.

### Blown film technology with water contact cooling ring

In this technology for producing polymer films, the molten polymer is extruded through a tubular die fed by a (usually single-screw) extruder and blown up to a tube. The film tube has contact on the exterior side to a water cooling ring and is cooled down quickly. The already solidified film tube is flattened afterwards by take-up rolls and taken off to a winder.

For a more detailed description see "Polypropylene Handbook", edited by Edward P. Moore, Jr., Hanser Publishers, 1996.

### Blown film technology with air quench

In this manufacturing step for air quenched blown films the film is made using at least a 1.5 blow up ratio, preferably at least a 2.0 blow up ratio, more preferably at least a 2.5 blow up ratio.

The technique of air quenched blown film extrusion is well known for the production of thin plastic films. In an advantageous process, plastics, such as low, linear low and high density polyethylene are extruded through a circular die to form a film. Air is introduced through the center of the die to maintain the film in the form of a bubble which increases the diameter of the film 1.5 to 6 fold, after which the bubble is collapsed onto rolers. There are a number of variations of such a process within the skill in the art. Most references to blowing polyolefin films disclose processes used for polyethylene, but these are applicable to the polymer compositions of the invention within few modifications within the skill in the art without undue experimentation.

For instance cooling is often advantageously modified because the art recognizes that polypropylene cools and crystallizes at a rate different from that of polyethylene.

Therefore, adjustments to the cooling parameters often produce a more stable bubble at desired output rates.

In the formation of blown films, the melted polymer composition (melt) enters a ring-shaped die either through the bottom or side thereof. The melt is forced through spiral grooves around the surface of a mandrel inside the die and extruded through the die opening as a thick-walled tube. The tube is expanded into a bubble of desired diameter and correspondingly decreased thickness as previously described.

Films produced from the polymer compositions according to the invention have of very good optical properties, high stiffness, good sealing properties and good lay flat. In addition they are steam sterilizable at 121°C for 30 min.

Referring to the sterilization process, the films according to the invention have higher improved optical properties after stem sterilization compared to films from propylene ethylene random copolymers or terpolymers according to the state of the art, where these properties deteriorate after steam sterilization.

Therefore these films can be advantageously used in the pharmaceutical area and in food packaging

### TEST METHODS

### Polymer properties

The **melt flow rates** were measured with a load of 2.16 kg and at 230°C. The melt flow rate (MFR) is that quantity of polymer in grams which the test apparatus standardized to ISO 1133 extrudes within 10 minutes at a temperature of 230°C under a weight of 2.16 kg.

**Comonomer contents** (ethylene and butene) were measured with Fourier transform infrared spectroscopy (FTIR) calibrated with ¹³C-NMR.

**Xylene solubles** were determined at 25 °C according to ISO 6427.

### Blown Film properties

**Gloss** and **haze** as measures for the optical appearance of the blown film were determined according to DIN 67 530 (gloss) and ASTM D 1003-92 (haze), both on blown film samples with a thickness of 50 µm.

The **tensile modulus** as a measure for the stiffness of the blown films was determined according to ISO 527 on blown film samples with a thickness of 50 µm.

**Elmendorf** was determined according to ISO 6383/2 on blown film samples with a thickness of 50 µm.

### Heat sealing initiating temperature (SIT)

### 1. General

The method determines the sealing temperature range of polypropylene blown films. The sealing temperature range is the temperature range, in which the films can be sealed according to the conditions given below. The lower limit (heat sealing initiation temperature (SIT)) is the sealing temperature at which a sealing strength of > 5 N is achieved. The upper limit (sealing end temperature (SET)) is reached, when the films start to crimp.

### 2. Sample geometry and sample preparation

The samples are taken in longitudinal direction of extrusion. The sample size is 25,4 mm x 250 mm, the film thickness is 50 µm.

### 3. Sealing Device

For sealing the laboratory sealing device DTC Hot tack tester is used. Prior to the test, the device is checked for the parallel position of the sealing jaws.

### 4. Sealing parameters

The sealing parameters are set to:

| | |
|---|---|
| Sealing force: | 0,66 N/mm2 |
| Sealing time: | 1 s |
| Sealing jaws: | 50 x 5 mm. smooth + Teflon film |
| Heating: | both jaws, precision +/- 1°C |
| Start temperature: | 100 °C |
| Take off speed: | 42 mm/sec |

### 5. Sealing procedure

- Stripes are folded to 125 x 25,4 mm and put between the sealing jaws.
- The jaws are heated to sealing temperature
- Immediately after sealing, the sample is taken out of the device
- For each temperature, 5 samples are sealed

### 6. Testing

To determine the initial strength, 5 samples are sealed at one temperature setting and with DTC Hot tack tester tested for the sealing strength.

If the mean value of 5 tests - as described above - is > 5N, then the heat sealing temperature is reached. If not, the sealing temperature is increased by 2 °C and the test is repeated.

After having reached the SIT, the sealing temperature is further increased in steps of 2 °C until the films start to crimp.

After a delay time of 30 sec after the sealing the film is stretched with a take-off speed of 42 mm/sec to measure the sealing strength in Newton. The SIT is the temperature where the sealing strength of > 5 N is reached.

### EXAMPLES

### Example 1 (invention):

### Production of the propylene/ethylene/1-butene terpolymer

A process comprising a prepolymerization step and a main polymerization step was used to produce the propylene terpolymer.

Temperatures, pressures, catalyst-, monomer- and hydrogen feed in the separate polymerization steps as well as the polymer concentration in the main reactor are kept constant. The molar mass of the terpolymer is controlled by adding hydrogen gas. The concentration of hydrogen in the mixture of liquid monomers is continuously measured by gas chromatography. The relevant processing parameters and analytical results of the resulting polymer are listed in tables 1 and 2.

The catalyst used was a highly active, stereospecific transesterified MgCl₂-supported Ziegler-Natta catalyst.

The catalyst is contacted with triethylaluminium (TEAL) as a cocatalyst and cyclohexyl methyldimethoxy silane (donor C) as an external donor to yield a catalyst system and then prepolymerized in a known manner in the presence of propylene in a small reactor (equipped with stirrer and cooling system).

The prepolymer (product A) is continuously removed from the prepolymerization unit and passed into the main reactor system (equipped with stirrer and cooling system), where under excess of a liquid mixture of the monomers propylene and 1-butene, under addition of ethylene, the final terpolymer (B) is formed. Further a mixture of monomers (propylene/1-butene/ethylene) and hydrogen (for molar mass control) are fed into the main reactor continuously. The polymer concentration is kept constant.

A part of the reactor content (polymer-/monomer excess) is continuously removed from the reactor into a degassing unit to separate the formed terpolymer (B) from unreacted monomer mixture by evaporation.

The separated terpolymer (B) was subjected to a steam treatment, to remove the unreacted monomers and volatile substances, and then dried. The polymer powder was mixed with 0,18 wt% nucleating agent ADK NA-21 from Asahi Denka Kokai.

Further the following additives were added:
300 ppm Mg_{4,5}Al₂(OH) ₁₃(CO₃) 3,5H₂O as acid neutralizing agent,
500 ppm Irganox 1010 (Ciba Speciality Chemicals) as antioxidant and
500 ppm Irgafos 168 (Ciba Speciality Chemicals) as stabilizer

This mixture is then pelletized in a conventional compounding line.

The polymer properties can be seen from table 3.

### Production of films

The palletized materials have been used for film blowing at a commercial blown-film line Alpine 35.

Blown films were produced on a single screw extruder with a barrel diameter of 70 mm and a round-section die of 200 mm with 1 mm die gap in combination with a monolip cooling ring and internal bubble cooling (IBC). Melt temperature was 210 °C in the die; the temperature of the cooling air was kept at 15 °C and the blow up ratio (BUR) 3:1. A film thickness of 50 µm was adjusted through the ratio between extruder output, take off speed and BUR.

The film properties can be seen from table 3.

### Comparative example 2 and 3:

As comparative examples 2 and 3 commercially available random copolymer grades (Borclear^{™} RB709CF and Borclear^{™}RB707CF) were used.

**Table 1:**

| **Parameter** | **unit** | **Example 1** |
|---|---|---|
| TEAl/Donor D | [g/g] | 5 |
| TEAI/Ti | [g/g] | 0,82 |
| TEAI/Ti | [mol/mol] | 1,36 |

**Table 2:**

| **Parameter** | **unit** | **Example 1** |
|---|---|---|
| **Prepolymerization reactor / Liquid monomer phase** | | |
| Feed catalyst compound | [g/h] | ~1,2 |
| Pressure | [bar] | 34 |
| Temperature | [°C] | 20 |
| Mean residence time | [min] | 10 |

| **Main reactor/ Liquid monomer phase** | | |
|---|---|---|
| Pressure | [bar] | 34 |
| Temperature | [°C] | 64 |
| Mean residence time catalyst | [min] | ~90 |
| Polymer concentration in reactor | [g/l] | ~0,52 |
| Feed propylene/1-buten mixture*) | [kg/h] | 127-133 |
| 1-Butene content in monomer feed | [Vol%] | ~20,5 |
| Ethylene feed | [kg/h] | 0,5 |
| H₂-concentration in monomer feed | [ppm] | 410-420 |
| Polymer production rate (product B) | [kg/h] | 27-43 |

| | | |
|---|---|---|
| *) total feed of liquid monomer mixture into the reactor system | | |

**Table 3**

| | | **Examples** | | |
|---|---|---|---|---|
| **Polymer Properties** | | **1** | **2 Comparative** | **3 Comparative** |
| | | | (RB709CF) | (RB707CF) |
| Ethylene conc. | [wt%] | 0,3 | 5,7 | 4,5 |
| 1-Butene conc. | [wt%] | 6,9 | - | - |
| Nucleator NA-21 | [ppm] | 1800 | 1800 | 1800 |
| Xylene Solubles | [wt%] | 3,5 | 7 | 7 |
| Melt Temperature | [°C] | 143 | 135 | 144 |
| MFR | g/10 min | 1,7 | 1,5 | 1,5 |
| conc.......... concentration | | | | |

**Table 4:**

| **Film Properties** | **Examples** | | | |
|---|---|---|---|---|
| | | **1** | **2 Comparative** | **3 Comparative** |
| | | | (RB709CF) | (RB707CF) |
| Haze b.s*) | [%] | 4,5 | 3,5 | 7,1 |
| Haze a.s*) | [%] | 4,8 | 9,4 | 8,3 |
| Gloss 20° outside b.s*) | [%] | 59,1 | 60,1 | 43,7 |
| Gloss 20° outside a.s*) | [%] | 71,4 | 13,6 | 37,2 |
| Gloss 20° inside b.s*) | [%] | 61,0 | 61,6 | 44,1 |
| Gloss 20° inside a.s*) | [%] | 72,3 | 20,5 | 35,9 |

| | | | | |
|---|---|---|---|---|
| *) b.s before sterilization *) a.s after sterilization | | | | |

steam sterilization was performed at 121 °C for 30 min

| | | | | |
|---|---|---|---|---|
| Tensile modulus md | [MPa] | 1250 | 739 | 1127 |
| Tensile modulus td | [MPa] | 1219 | 718 | 1127 |
| S.I.T. | [°C] | 122 | 112 | 124 |
| Sealing temperature | [°C] | 115 | 105 | 120 |

These examples show that the values of the optical properties haze and gloss of example 1 improve after the sterilization, whereas for examples 2 and 3 they deteriorate.

Furthermore the film from example 1 shows a much higher tensile modulus compared to example 2 and a higher tensile modulus compared to example 3.

## Claims

1. Use of a polymer composition comprised of (i) a propylene/butene terpolymer which is comprised of
86.0 - 98.0 wt% of propylene
2.0 - 12.0 wt% of butene and
0.1 - to less than 1.0 wt% of ethylene and
(ii) 0.001 - 1.0 wt% of one or more phosphorous based and/or polymeric α-nucleating agents
for the production of sterilizable water or air quenched blown films which have the following properties:
a) a haze according to ASTM D 1003-92 for a 50 µm film of less than 8% before and after steam sterilization at 121 °C for 30 minutes and
b) 20° Gloss according to DIN 67 530 for a 50 µm film of at least 55% before steam sterilization at 121°C for 30 minutes and of at least 60% after steam sterilization at 121°C for 30 minutes.

2. Use according to claim 1, **characterized in that** the films exhibit the following property:
a tensile modulus (md) according ISO 527 of at least 1000 MPa for a 50 µm film.

3. Use according to any of claims 1 or 2, **characterized in that** the α-nucleating agent comprises one or more phosphorous-based alpha-nucleating agents and/or polymeric alpha-nucleating agents selected from the group consisting of vinylcycloalkane polymers and vinylalkane polymers.

4. Use according to claims 3, **characterized in that** the α-nucleating agent is selected from the group of aluminium hydroxyl-bis[2,4,8,10-tetrakis(1,1-dimethylethyl)-6-hydroxy-12H-dibenzo[d,g]dioxaphoshocin-6-oxidato] based nucleating agents, sodium-2,2'-methylene-bis(4,6-di-t-butylphenyl)phosphate, aluminium-hydroxy-bis[2,2'-methylene-bis(4,6-di-t-butylphenyl)-phosphate] and from polymeric nucleating agents selected from the group consisting of vinylcycloalkane polymers and vinylalkane polymers.

5. Use according to any of claims 1 to 4, **characterized in that** said polymer has a portion of polymer soluble in cold xylene (25°C) of no more than 5%.

6. Use according to any of claims 1 to 5, **characterized in that** the films have a thickness of from 5 to 1500 µm.

7. Use according to any of claims 1 to 6 for the production of sterilizable air quenched blown films.

8. Use according to any of claims 1 to 7 for the production of sterilizable films for the pharmaceutical area and for food packaging.

9. Use according to any one of claims 1 to 8 for multilayer blown films, where at least one layer is comprised of a propylene blown film according to claim 1.

10. Blown films obtained by a use according to any one of claims 1 to 9.

11. Blown film, wherein the blown film comprises a polymer composition comprised of (i) a propylene/butene terpolymer which is comprised of 86.0 - 98.0 wt% of propylene
2.0 - 12.0 wt% of butene and
0.1 - to less than 1.0 wt% of ethylene
and (ii) 0.001 - 1.0 wt% of one or more phosphorous based and/or polymeric α-nucleating agents
which film has the following properties:
a) a haze according to ASTM D 1003-92 for a 50 µm film of less than 8% before and after steam sterilization at 121°C for 30 minutes and
b) 20° Gloss according to DIN 67 530 for a 50 µm film of at least 55% before steam sterilization at 121 °C for 30 minutes and of at least 60% after steam sterilization at 121°C for 30 minutes.

## Patentansprüche

1. Verwendung einer Polymerzusammensetzung, umfassend
(i) ein Propylen/Buten Terpolymer, welches 86.0 - 98.0 Gew.-% Propylen, 2.0 -12.0 Gew.-% Buten und 0.1 Gew.-% bis unter 1.0 Gew.-% Ethylen und
(ii) 0.001 - 1.0 Gew.-% eines oder mehrerer Phosphor- und/oder Polymer-basierten α-Nukleierungsmittel enthält,
zur Herstellung sterilisierbarer wasser- oder luftabgeschreckter Blasfolien, welche die folgenden Eigenschaften aufweisen:
a) Eine Trübung gemäß ASTM D 1003-92 von weniger als 8% vor und nach einer 30 Minuten dauernden Dampfsterilisation bei 121 °C für einen Film der Dicke 50 µm und
b) 20° Glanz gemäß DIN 67 530 von mindestens 55% vor einer 30 Minuten dauernden Dampfsterilisation bei 121 °C und mindestens 60% nach einer 30 Minuten dauernden Dampfsterilisation bei 121 °C für einen Film der Dicke 50 µm.

2. Verwendung gemäß Anspruch 1, **dadurch gekennzeichnet, dass** die Filme die folgende Eigenschaft aufweisen: Ein Zugmodul (md) gemäß ISO 527 von mindestens 1000 MPa für einen Film der Dicke 50 µm.

3. Verwendung gemäß Anspruch 1 oder 2, **dadurch gekennzeichnet, dass** das α-Nukleierungsmittel eines oder mehrere Phosphor-basierte α-Nukleierungsmittel und/oder Polymer-basierte α-Nukleierungsmittel, ausgewählt aus Vinylcycloalkan- und Vinylalkan-Polymeren, enthält.

4. Verwendung gemäß Anspruch 3, **dadurch gekennzeichnet, dass** das α-Nukleierungsmittel ausgewählt wird aus der Gruppe der Aluminium-Hydroxyl-bis[2,4,8,10-tetrakis(1,1-dimethylethyl)-6-hydroxy-12H-dibenzo[d,g]dioxaphoshocin-6-oxidato]-basierten α-Nukleierungsmittel, Natrium-2,2`-methylen-bis(4,6-di-t-butylphenyl)phosphat, Aluminium-2,2'-methylen-bis(4,6-di-t-butylphenyl)phosphat und aus Polymer-basierten Nukleierungsmitteln, ausgewählt aus Vinylcycloalkan- und Vinylalkan-Polymeren.

5. Verwendung gemäß einem der Ansprüche 1-4, **dadurch gekennzeichnet, dass** das besagte Polymer bei einer Temperatur von 25 °C einen Xylol-löslichen Anteil von nicht mehr als 5% aufweist.

6. Verwendung gemäß einem der Ansprüche 1-5, **dadurch gekennzeichnet, dass** die Filmdicke zwischen 5 und 1500 µm beträgt.

7. Verwendung gemäß einem der Ansprüche 1-6 für die Herstellung sterilisierbarer luftabgeschreckter Blasfilme.

8. Verwendung gemäß einem der Ansprüche 1-7 für die Herstellung sterilisierbarer Filme für den pharmazeutischen Bereich und Lebensmittelverpackungen.

9. Verwendung gemäß einem der Ansprüche 1-8 für mehrschichtige Blasfilme, wobei mindestens eine Schicht einen Propylen-Blasfilm gemäß Anspruch 1 umfasst.

10. Blasfilme, erhalten durch eine Anwendung gemäß einem der Ansprüche 1-9.

11. Blasfilm, welcher eine Polymerzusammensetzung enthält, umfassend
(i) ein Propylen/Buten Terpolymer, welches 86.0 - 98.0 Gew.-% Propylen, 2.0 -12.0 Gew.-% Buten und 0.1 Gew.-% bis unter 1.0 Gew.-% Ethylen und
(ii) 0.001 - 1.0 Gew.-% eines oder mehrerer Phosphor- und/oder Polymer-basierten α-Nukleierungsmittel enthält,
und die folgenden Eigenschaften aufweist:
a) Eine Trübung gemäß ASTM D 1003-92 von weniger als 8% vor und nach einer 30 Minuten dauernden Dampfsterilisation bei 121 °C für einen Film der Dicke 50 µm und
b) 20° Glanz gemäß DIN 67 530 von mindestens 55% vor einer 30 Minuten dauernden Dampfsterilisation bei 121 °C und mindestens 60% nach einer 30 Minuten dauernden Dampfsterilisation bei 121 °C für einen Film der Dicke 50 µm.

## Revendications

1. Utilisation d'une composition polymère composée de (i) un terpolymère de propylène/butène qui se compose de
86,0 à 98,0 % en poids de propylène,
2,0 à 12,0 % en poids de butène, et
0,1 à moins de 1,0 % en poids d'éthylène, et de (ii) 0,001 à 1,0 % en poids d'un ou de plusieurs agents de nucléation α à base de phosphore et/ou polymères
pour la production de films soufflés refroidis à l'eau ou à l'air et stérilisables, qui présentent les propriétés suivantes :
a) un trouble selon ASTM D 1003-92 pour un film de 50 µm inférieur à 8 % avant et après stérilisation à la vapeur à 121 °C pendant 30 minutes, et
b) une brillance à 20° selon DIN 67 530 pour un film de 50 µm d'au moins 55 % avant stérilisation à la vapeur à 121 °C pendant 30 minutes et d'au moins 60 % après stérilisation à la vapeur à 121 °C pendant 30 minutes.

2. Utilisation selon la revendication 1, **caractérisée en ce que** les films présentent la propriété suivante :
un module d'élasticité en traction (md) selon ISO 527 d'au moins 1000 MPa pour un film de 50 µm.

3. Utilisation selon l'une quelconque des revendications 1 ou 2, **caractérisée en ce que** l'agent de nucléation α comprend un ou plusieurs agents de nucléation alpha à base de phosphore et/ou agents de nucléation alpha polymères sélectionnés dans le groupe composé de polymères de vinylcycloalcane et de polymères de vinylalcane.

4. Utilisation selon la revendication 3, **caractérisée en ce que** l'agent de nucléation alpha est sélectionné dans le groupe composé d'agents de nucléation à base d'hydroxyl-bis[2,4,8,10-tétrakis(1,1-diméthyléthyl)-6-hydroxy-12H-dibenzo[d,g]dioxaphosphocin-6-oxidato] d'aluminium, du 2,2'-méthylène-bis(4,6-di-t-butylphényl)phosphate de sodium, de l'hydroxy-bis[2,2'-méthylène-bis(4,6-di-t-butylphényl)-phosphate] d'aluminium, et d'agents de nucléation polymères sélectionnés dans le groupe composé de polymères de vinylcycloalcane et de polymères de vinylalcane.

5. Utilisation selon l'une quelconque des revendications 1 à 4, **caractérisée en ce que** ledit polymère a une portion de polymère soluble dans le xylène froid (25 °C) qui n'excède pas 5 %.

6. Utilisation selon l'une quelconque des revendications 1 à 5, **caractérisée en ce que** les films ont une épaisseur comprise entre 5 et 1500 µm.

7. Utilisation selon l'une quelconque des revendications 1 à 6 pour la production de films soufflés refroidis à l'air et stérilisables.

8. Utilisation selon l'une quelconque des revendications 1 à 7 pour la production de films stérilisables pour le secteur pharmaceutique et pour le secteur de l'emballage alimentaire.

9. Utilisation selon l'une quelconque des revendications 1 à 8 pour des films soufflés multicouche, dans lesquels au moins une couche se compose d'un film soufflé de propylène selon la revendication 1.

10. Films soufflés obtenus grâce à une utilisation selon l'une quelconque des revendications 1 à 9.

11. Film soufflé, où le film soufflé comprend une composition polymère composée de (i) un terpolymère de propylène/butène qui se compose de
86,0 à 98,0 % en poids de propylène,
2,0 à 12,0 % en poids de butène, et
0,1 à moins de 1,0 % en poids d'éthylène,
et de (ii) 0,001 à 1,0 % en poids d'un ou de plusieurs agents de nucléation α à base de phosphore et/ou polymères,
ledit film présentant les propriétés suivantes :
a) un trouble selon ASTM D 1003-92 pour un film de 50 µm inférieur à 8 % avant et après stérilisation à la vapeur à 121 °C pendant 30 minutes, et
b) une brillance à 20° selon DIN 67 530 pour un film de 50 µm d'au moins 55 % avant stérilisation à la vapeur à 121 °C pendant 30 minutes et d'au moins 60 % après stérilisation à la vapeur à 121 °C pendant 30 minutes.
